# FASCICULE DE BREVET EUROPEEN

(11) **EP 3 068 218 B1**
(45) Date de publication et mention de la délivrance du brevet: **27.12.2017**
(21) Numéro de dépôt: 14809460.0
(22) Date de dépôt: 04.11.2014
(51) Int. Cl.: A01M 23/30

(54) **PIÈGE POUR ANIMAUX NUISIBLES, NOTAMMENT RATS ET SOURIS**
FALLE FÜR TIERSCHÄDLINGE, INSBESONDERE RATTEN UND MÄUSE
TRAP FOR ANIMAL PESTS, IN PARTICULAR RATS AND MICE

(30) Priorité: 15.11.2013 FR 1361216
(43) Date de publication de la demande: 21.09.2016
(73) Titulaire: Liphatech, 47480 Pont-du-Casse (FR)
(72) Inventeur: GOUJON, Aurélie, 01570 Manziat (FR); BIZET, Bruno, 71260 Montbellet (FR); HOT, Arnaud, 47130 Clermont-dessous (FR); LAMONGIE, Lisa, 47000 Agen (FR); TRESSENS, Véronique, 82400 Pommevic (FR)
(74) Mandataire: Cabinet BARRE LAFORGUE & associés
(86) Numéro de dépôt international: PCT/FR2014/052798
(87) Numéro de publication internationale: WO 2015/071571

(56) Documents cités:
- US-A- 2 099 021
- US-A- 2 492 957
- US-A- 3 992 803

## Description

L'invention concerne un piège pour animaux nuisibles, notamment pour rongeurs, et particulièrement pour souris ou rats, présentant une efficacité améliorée, et un maniement simplifié et plus hygiénique que la plupart des pièges connus.

On connaît de nombreux types de pièges pour rongeurs, dont l'un des plus anciens et des plus connus, dénommé "tapette" est constitué d'une plaquette de base généralement rectangulaire sur laquelle est articulé un étrier à ressort maintenu dans une position armée par une aiguille articulée rabattue au-dessus de la barre de frappe de l'étrier et dont l'extrémité opposée à la barre de frappe est engagée dans un arceau solidaire d'un déclencheur muni d'un porte-appât. Lorsqu'un rongeur, par exemple une souris, se saisit de l'appât monté sur le porte appât, le poids de la souris sur le déclencheur libère l'aiguille articulée. L'étrier est alors libéré et se rabat violemment sous l'effet du ressort dans sa position désarmée, brisant au passage le dos de la souris. Ce piège connu présente de nombreux inconvénients, parmi lesquels la longueur et donc la durée du trajet de l'étrier entre sa position armée et désarmée (rotation sur 180°) pouvant permettre à la souris d'éviter l'étrier. De même, la souris pouvant aborder l'appât de tous les côtés, et en particulier du côté de l'étrier armé, elle peut éviter celui-ci lorsqu'il se rabat. En outre, ce type de piège est délicat à armer et son mécanisme complètement accessible peut être dangereux pour les enfants et les animaux de compagnie.

On connaît, par exemple du document US 2 492 957, un piège à rongeurs comprenant un corps parallélépipédique formant tunnel et comportant une extrémité ouverte dans laquelle une souris peut s'engager. Un étrier à ressort est articulé à l'extérieur du corps entre une position armée sensiblement orthogonale à l'axe du corps et une position désarmée orthogonale à la position précédente, permettant de limiter le trajet de l'étrier à une rotation de 90°. La barre de frappe de l'étrier pénètre à l'intérieur du corps au travers d'une fente en arc de cercle ménagée dans le corps. Si ce type de piège apporte une solution à certains des inconvénients de la technique antérieure, en guidant la souris à l'intérieur d'un corps tubulaire, son mécanisme de déclenchement complexe le rend délicat à mettre en oeuvre.

Dans le présent texte, on utilise, pour la simplicité de la description, des termes relatifs à la position du piège, tels que haut, bas, avant, arrière, dessus, dessous, vertical, horizontal, etc. en référence à la position du piège dans son mode de fonctionnement, c'est-à-dire le corps posé horizontalement sur le sol, l'avant du piège étant déterminé par la position de l'ouverture d'entrée, l'étrier étant dans une orientation sensiblement verticale, vers le haut, au-dessus du corps du piège, lorsqu'il est dans sa position armée. Ces termes ne doivent pas être considérés comme une limitation, le piège selon l'invention pouvant être placé dans d'autres positions, comme par exemple accroché à une tige de présentoir sur les étagères d'un magasin lors de sa commercialisation.

La présente invention a donc pour but de fournir un piège pour animaux nuisibles qui ne présente pas les inconvénients de la technique antérieure.

L'invention vise un piège dont l'armement est simplifié et sécurisé et pour lequel la mise en place de l'appât est facilitée.

L'invention vise encore un tel piège dans lequel le déclenchement est amélioré.

L'invention vise également à un piège permettant une manipulation hygiénique et sécurisée, sans contact avec les animaux morts pris au piège.

L'invention vise en outre un piège permettant de détecter rapidement et aisément si un animal a été pris au piège.

L'invention vise encore un tel piège dans lequel les éventuelles salissures sont confinées et qui soit facile à nettoyer.

L'invention vise de plus un tel piège dont la fabrication est facilitée, le nombre de pièces réduit, le montage simplifié et dont le coût est faible.

Pour ce faire, l'invention concerne un piège pour animaux nuisibles, notamment rats et souris, comportant :
- un corps formant tunnel, ouvert au moins à l'une de ses extrémités, dite ouverture d'entrée,
- un étrier, comportant une barre de frappe, guidé en rotation autour d'un axe, dit axe d'étrier, entre une première position, dite position armée, dans laquelle la barre de frappe est au-dessus du corps et une seconde position dite position de prise,
- un dispositif de rappel élastique de l'étrier dans la position de prise,
- un déclencheur adapté pour déclencher le rappel de l'étrier de la position armée à la position de prise par le dispositif de rappel élastique,
   caractérisé en ce que
- le déclencheur comporte à l'intérieur du corps une plateforme pivotante autour d'un axe parallèle à l'axe d'étrier, ladite plateforme comprenant un porte-appât agencé pour permettre la fixation d'un appât solide par le dessous de la plateforme,
- le corps du piège comporte une trappe ménagée dans la face inférieure du corps en regard du porte-appât, ladite trappe présentant une ouverture d'une taille adaptée pour permettre un accès manuel au porte-appât et la fixation de l'appât sur le porte-appât.

Grâce à cette orientation du porte-appât et à l'utilisation d'un appât solide, un animal attiré par l'appât a tendance à combiner son effort de traction sur celui-ci avec son propre poids pour faire basculer le déclencheur. De plus, il est ainsi possible de venir fixer un appât sur le porte-appât en passant par le dessous du piège, c'est-à-dire hors de portée de la barre de frappe de l'étrier, quelle qu'en soit la position, minimisant ainsi les risques pour l'opérateur de se pincer les doigts dans le piège. Pour cela, la trappe présente une dimension suffisante pour que l'opérateur puisse glisser ses doigts ou un ustensile tel qu'une pince portant l'appât et venir le fixer sur le porte-appât. Quoique la mise en place de l'appât s'effectue préférentiellement lorsque le piège est désarmé, c'est-à-dire dans sa position de prise, il est sécurisant de pouvoir rajuster l'appât ou le remplacer même si le piège est armé, sans risquer d'avoir les doigts pincés ou écrasés par la barre de frappe en cas de déclenchement intempestif du piège. En outre, la trappe d'accès à l'appât étant située sous le piège, donc inaccessible en position normale de fonctionnement, l'animal attiré par l'odeur de l'appât se dirige naturellement vers l'ouverture d'entrée du piège et ne peut pas tenter d'y accéder par une voie détournée qui pourrait compromettre sa prise.

Avantageusement et selon l'invention, le dispositif de rappel élastique comporte au moins un point d'attache sur l'étrier distinct de l'axe d'étrier, et est agencé de manière à produire une force de rappel comportant une composante radiale dirigée en direction de l'axe d'étrier et une composante tangentielle dont le sens s'inverse au passage d'un point mort haut, placé entre la position armée et la position de prise et le piège comporte une butée, dite butée d'armement, limitant un déplacement de l'étrier au-delà de la position d'armement à l'opposé de la position de prise, la composante tangentielle de la force de rappel appliquant l'étrier contre la butée d'armement en position armée.

Grâce à l'agencement particulier du(des) point(s) d'attache du dispositif élastique distinct(s) de l'axe de l'étrier, le couple exercé sur l'étrier par la force de rappel s'annule lorsque le point d'accrochage du dispositif élastique sur le corps, le point d'attache sur l'étrier et l'axe de celui-ci sont alignés. Lorsque le sens de la composante radiale de la force de rappel est dirigé vers l'axe de l'étrier, cette position est instable, le couple exercé par la composante tangentielle de la force de rappel tendant à éloigner l'étrier de cette position dès qu'il s'en écarte. Ainsi, l'armement du piège est extrêmement facilité. En effet, il suffit de tirer sur l'étrier pour le déplacer à environ 90° à 100° de sa position de prise jusqu'à ce que l'étrier vienne en contact avec la butée d'armement pour que le piège soit armé. Il n'est pas nécessaire de bloquer l'étrier avec un dispositif complexe pour que celui-ci reste en position armée. La butée d'armement et l'étrier sont agencés de telle sorte que lorsque l'étrier vient en contact sur la butée d'armement, l'étrier se trouve au-delà du point mort haut, dans la direction de sa position armée de telle sorte que le couple exercé par le dispositif de rappel élastique vise à le maintenir dans cette position. A noter que le dispositif de rappel élastique peut être indifféremment un dispositif de traction ou un dispositif fonctionnant en compression. De même, la butée d'armement peut être agencée sur le déclencheur ou sur le corps du piège.

Avantageusement et selon l'invention, le point d'attache du dispositif de rappel élastique sur l'étrier est placé entre l'axe d'étrier et la barre de frappe dans un plan défini par ceux-ci. Cette disposition particulière permet d'utiliser un dispositif élastique de traction, tel qu'un ressort hélicoïdal de traction dont les extrémités sont en forme de crochet de manière à pouvoir le monter facilement. D'autres dispositifs élastiques, comme par exemple un bracelet élastique, pourraient également être employés. Le dispositif élastique est mis en tension maximum lorsque l'étrier passe par le point mort haut et l'étrier est bloqué en position d'armement par le contact d'une partie de l'étrier sur la butée d'armement.

Alternativement et toujours selon l'invention, le point d'attache du dispositif de rappel élastique sur l'étrier est déporté en avant d'un plan défini par l'axe d'étrier et la barre de frappe et placé de façon à permettre un alignement du point d'attache, de l'axe d'étrier et d'un point d'accrochage du dispositif de rappel élastique sur le corps au voisinage de la position armée de l'étrier. Grâce à ce déport du point d'attache, il est possible d'affiner la sensibilité du piège. En effet, pour une distance entre le point d'attache et l'axe d'étrier constante, plus le déport est accentué plus le piège est sensible, jusqu'à une limite à partir de laquelle le point mort haut n'est pas franchi avant que l'étrier ne soit arrêté par la butée d'armement.

Avantageusement et selon l'invention, l'étrier comporte un talon placé à l'opposé de la barre de frappe par rapport à l'axe d'étrier, adapté pour venir en butée contre la butée d'armement.

Avantageusement et selon l'invention, le déclencheur comporte une extrémité, dite face arrière, opposée au porte-appât par rapport à l'axe du déclencheur, dont la section droite par un plan orthogonal à l'axe de l'étrier présente un rayon de courbure supérieur à une distance minimale entre l'axe du déclencheur et ladite face arrière, de manière à former la butée d'armement lorsque le talon vient en butée contre une zone de ladite face arrière située à cette distance minimale et à éloigner le talon de l'axe du déclencheur en dehors de cette zone. De ce fait, la face arrière du déclencheur forme à la fois la butée d'armement et le mécanisme de déclenchement du piège. En effet, la face arrière du déclencheur est adaptée pour repousser le talon de l'étrier au-delà de la position de point mort haut, dans laquelle le couple de rappel exercé par le dispositif élastique sur l'étrier change de sens, quel que soit le sens de bascule du déclencheur au-delà de sa position d'équilibre dans laquelle la distance est minimale entre l'axe du déclencheur et la face arrière. Par exemple, une telle forme peut être constituée par une surface concave de génératrice parallèle à l'axe du déclencheur dont la concavité est orientée vers le talon de l'étrier. D'autres formes, en V ou en arc de cercle pourraient être envisagées.

Avantageusement et selon l'invention, la face arrière du déclencheur présente une surface plane orthogonale à et s'étendant de part et d'autre de la plateforme du déclencheur. Le déclencheur comporte ainsi une plateforme plane sensiblement rectangulaire, pivotant autour d'un axe horizontal défini par deux pivots. L'une des extrémités de la plateforme, opposée au porte-appât, est reliée à la face arrière qui forme une plaque orthogonale au plan de la plateforme et s'étend sensiblement symétriquement au-dessus et au-dessous d'une ligne définie par un plan orthogonal à la surface de la face arrière et passant par l'axe du déclencheur sur laquelle s'appuie le talon de l'étrier lors de l'armement, en dehors de tout effort externe exercé sur le déclencheur. Cette ligne est la zone située à une distance minimale de l'axe du déclencheur. Avantageusement, dans ce cas, la force tangentielle exercée par le talon tend à maintenir le déclencheur dans une position d'équilibre où la plateforme est sensiblement horizontale. Lorsque le déclencheur pivote autour de son axe, le talon de l'étrier glisse sur la face arrière et la distance entre l'axe du déclencheur et le talon s'accroit jusqu'au passage de l'étrier au-delà du point mort haut.

Avantageusement et selon l'invention, la plateforme comporte une plaque transversale sensiblement orthogonale à la plateforme et supportant le porte-appât. Cette plaque transversale permet d'empêcher un rongeur d'avancer au-delà de la plaque en direction du mécanisme afin d'éviter d'une part de souiller le mécanisme du piège et d'autre part que la barre de frappe de l'étrier se rabatte sur un animal trop avancé à l'intérieur du piège et le prenne au niveau des reins entrainant ainsi une mort pas assez rapide et trop de souffrance pour l'animal.

Avantageusement et selon l'invention, la plateforme comporte à son extrémité opposée à la face arrière deux pattes d'appui latérales adaptées pour immobiliser le déclencheur lorsque l'étrier est en position de prise. Les deux pattes d'appui s'étendent à l'extrémité de la plateforme jusque sous la barre de frappe de l'étrier lorsque celui-ci est rabattu en position de prise. Dès lors elles sont immobilisées sous la barre de frappe et immobilisent le déclencheur. La pose d'un appât sur le porte-appât du déclencheur en est ainsi facilitée.

Avantageusement et selon l'invention, le corps du piège comporte deux sections, une section avant comportant l'ouverture d'entrée et une section arrière adaptée pour s'emboiter sur la section avant à l'opposé de l'ouverture d'entrée, au moins l'une des deux sections comportant au niveau de l'emboiture des encoches latérales adaptées pour coopérer avec des pivots de l'étrier et du déclencheur. De préférence, la section arrière comporte des encoches de forme circulaire comportant une ouverture vers l'avant dans lesquelles des pivots de l'étrier du déclencheur peuvent entrer en force, la section avant comportant une contrepartie des ouvertures de ces encoches permettant de les refermer. Il est ainsi possible de monter l'étrier et le déclencheur sur la section arrière. Avantageusement, la section arrière comporte également le point d'accrochage du dispositif élastique sur le corps ce qui permet de monter complètement le mécanisme du piège sur la section arrière. De cette manière, le piège peut être séparé en deux parties, la section arrière comportant le mécanisme et la section avant, dans laquelle un animal est pris au piège et éventuellement tué par la barre de frappe. La section avant, qui peut être souillée, peut ainsi être séparée pour être nettoyée sans que cela affecte le mécanisme du piège.

Avantageusement et selon l'invention, le corps du piège comporte une fente en arc de cercle sur ses parois latérales et ouverte sur le dessus pour permettre le passage de la barre de frappe de l'étrier entre la position d'armement et la position de prise. Cette fente permet ainsi à la barre de frappe de pénétrer à l'intérieur du corps pour tuer l'animal pris dans le piège et ainsi de confiner les éventuelles souillures à l'intérieur du corps. De plus, la manipulation de l'étrier s'effectuant par les bras latéraux de l'étrier, sans toucher la barre de frappe qui est la seule partie de l'étrier à venir en contact avec l'animal pris au piège, l'opérateur ne vient à aucun moment en contact avec une partie éventuellement souillée du piège. La manipulation de ce piège est donc particulièrement hygiénique.

Avantageusement et selon l'invention, le corps du piège comporte en regard de la fente en arc de cercle une enclume adaptée pour recevoir la barre de frappe lorsque l'étrier est en position de prise. Outre qu'elle renforce le corps du piège lorsque l'étrier se rabat, l'enclume permet de renforcer l'efficacité de la barre de frappe.

Avantageusement et selon l'invention, l'enclume comporte deux encoches latérales adaptées pour recevoir les pattes d'appui lorsque l'étrier est en position de prise. Les encoches permettent de protéger les pattes d'appui et de les escamoter lorsque la barre de frappe est rabattue. Ainsi, la barre de frappe porte sur l'enclume sur la majeure partie de la largeur du piège.

Avantageusement et selon l'invention, le corps du piège est au moins partiellement transparent ou translucide. De préférence, la section avant du corps du piège est réalisée en matière synthétique transparente. De cette manière, un animal entrant dans le piège peut voir sur les côtés et n'est pas effrayé par la brusque transition lumineuse. En outre, il est ainsi possible de vérifier si un animal est pris au piège.

Avantageusement et selon l'invention, le corps du piège est de section quadrangulaire. Le piège, de forme sensiblement parallélépipédique, peut être ainsi placé de manière stable le long d'une plinthe, sur le trajet préférentiel d'animaux comme les souris.

Avantageusement et selon l'invention, l'étrier est formé d'une tige contre-coudée formant en une seule pièce la barre de frappe, des bras latéraux, des pivots matérialisant l'axe d'étrier, au moins un point d'attache du dispositif élastique et le talon de l'étrier. En utilisant une tige métallique contre-coudée pour former l'étrier en une seule pièce, le nombre de pièces utilisées pour fabriquer le piège est réduit, et la fabrication et le montage d'un tel piège sont particulièrement économiques.

L'invention concerne également un piège pour animaux caractérisé en combinaison par tout ou partie des caractéristiques mentionnées ci-dessus ou ci-après.

D'autres buts, caractéristiques et avantages de l'invention apparaîtront au vu de la description qui va suivre et des dessins annexés dans lesquels :
- la figure 1 est une vue en perspective éclatée d'un piège selon l'invention,
- la figure 2 est une vue de face du piège selon l'invention, vue par l'ouverture d'entrée de celui-ci,
- la figure 3 est une vue de côté du piège selon l'invention, paroi latérale enlevée, montrant le mécanisme de celui-ci, en position armée et
- la figure 4 est une vue de côté du piège selon l'invention, paroi latérale enlevée, montrant le mécanisme de celui-ci, en position de prise.

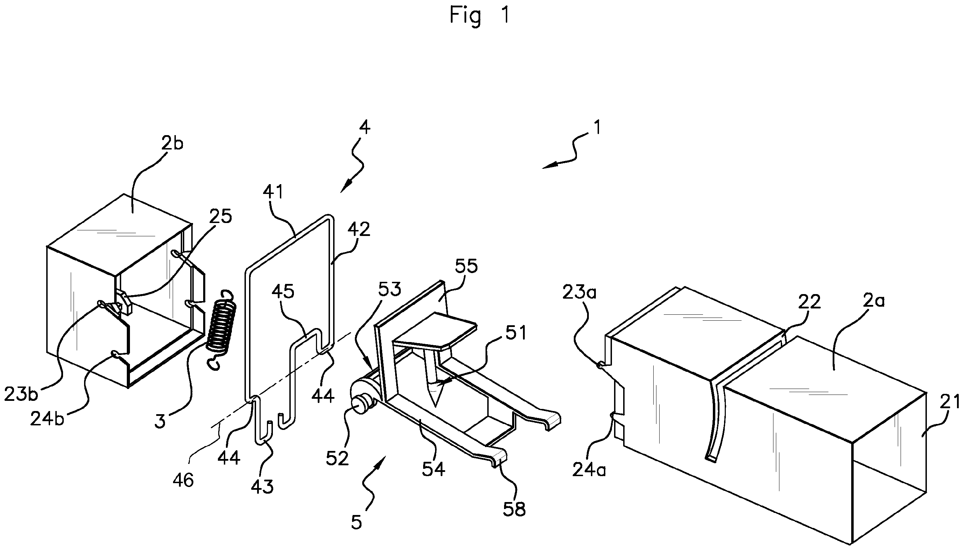

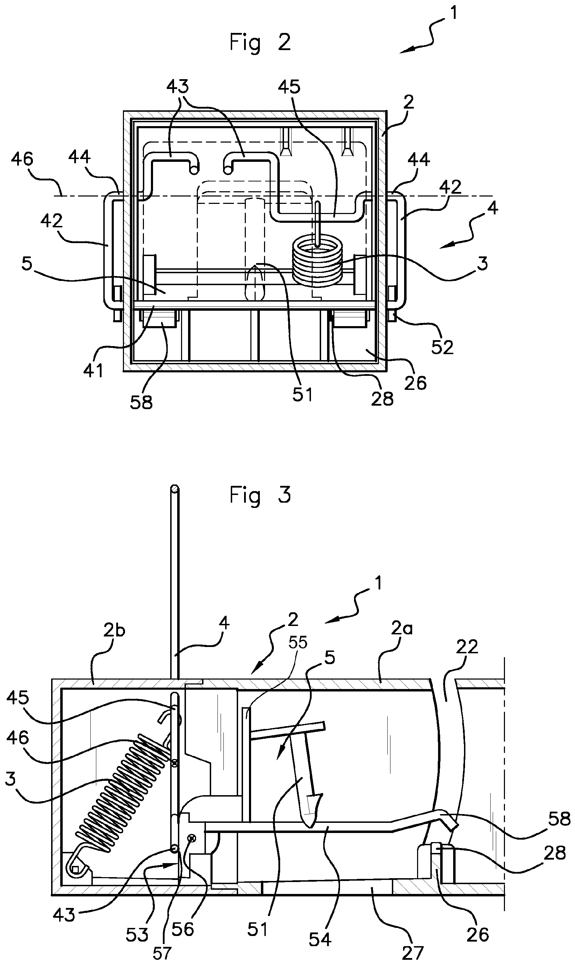

Le piège 1 pour animaux représenté en éclaté à la figure 1, comporte uniquement cinq pièces : un corps 2 (figure 2 ou 3) parallélépipédique constitué de deux sections, une section avant 2a et une section arrière 2b, un dispositif élastique sous la forme d'un ressort 3 hélicoïdal de traction comprenant deux extrémités en forme de crochet, un étrier 4 et un déclencheur 5.

La section avant 2a du corps 2 comporte une extrémité ouverte formant une ouverture d'entrée 21 permettant à un animal de pénétrer à l'intérieur du piège. L'autre extrémité de la section avant 2a est adaptée pour s'emboîter dans l'extrémité correspondante de la section arrière 2b. La section arrière 2b comporte sur ses parois latérales deux encoches 23b et 24b comprenant chacune une entrée sensiblement triangulaire aboutissant dans un orifice sensiblement cylindrique adapté pour former un palier respectivement pour les pivots 44 de l'étrier 4 et 52 du déclencheur 5. La section avant 2a comporte en regard des encoches 23b et 24b des excroissances 23a et 24a complémentaires des entrées triangulaires et complétant l'orifice cylindrique de manière à refermer les paliers sur les pivots lorsque les deux sections sont emboîtées l'une dans l'autre. La section avant 2a comporte également une fente 22 en arc de cercle selon un plan vertical adaptée pour permettre le passage d'une barre de frappe 41 de l'étrier 4 lors de la rotation de celui-ci sur ses pivots 44. La section arrière 2b comporte également sur sa face inférieure un point d'accrochage 25 adapté pour coopérer avec l'un des crochets d'extrémité du ressort 3. Le point d'accrochage 25 peut être également ménagé sur la paroi de fond de la section arrière.

L'étrier 4 est formé d'une tige préférentiellement métallique, contre-coudée pour former les différentes parties de l'étrier : une barre de frappe 41 destinée à assommer, voire à briser la nuque ou le dos d'un animal dans le piège, deux bras latéraux 42 reliés à la barre de frappe de part et d'autre de celle-ci par une de leurs extrémités et comportant à leur autre extrémité un coude suivi d'une portion de tige formant deux pivots 44 coaxiaux, parallèles à la barre de frappe 41 et orientés vers l'intérieur de l'étrier. L'axe commun des deux pivots 44 forme l'axe d'étrier 46 autour duquel celui-ci pivote entre une position dite armée dans laquelle l'étrier est sensiblement vertical et une position dite de prise dans laquelle l'étrier est rabattu sous l'effet du ressort 3. À l'extrémité de l'un des pivots au moins, la tige est coudée de manière à former une barre servant de point d'attache 45 pour l'autre crochet d'extrémité du ressort 3. Le point d'attache 45 est parallèle à l'axe des pivots 44 et à la barre de frappe 41, et placé entre la barre de frappe 41 et l'axe d'étrier 46. Dans sa réalisation la plus simple représentée sur les dessins, la barre formant le point d'attache 45 est dans le même plan que les autres sections de la tige. Cependant, afin d'améliorer la sensibilité du piège, il est possible de déporter le point d'attache 45 en avant du plan de l'étrier afin de faciliter l'alignement du point d'accrochage 25, de l'axe d'étrier 46 et du point d'attache 45. La tige de l'étrier est ensuite coudée à partir du point d'attache 45 d'une part et de l'autre pivot 44 d'autre part, dans la direction opposée à la barre de frappe 41 pour former un talon 43 adapté pour venir en appui sur une face arrière 53 du déclencheur 5.

Le déclencheur 5 comporte deux pivots 52 coaxiaux définissant un axe 56 de pivotement du déclencheur sensiblement parallèle à l'axe 46 de l'étrier. Les pivots 52 sont adaptés pour coopérer avec les encoches 24b de la section arrière 2b du corps 2. À l'opposé de la face arrière 53 par rapport aux pivots 52, le déclencheur 5 présente une plate-forme 54 sensiblement horizontale barrée transversalement par une plaque 55 verticale soutenant un porte-appât 51 au dessus d'une ouverture 59 ménagée dans la plate-forme 54. Comme on le verra par la suite, ce porte-appât est avantageusement orienté vers le bas de manière à ce qu'un appât solide puisse y être accroché par le dessous du déclencheur. La plate-forme 54 se termine par deux pattes d'appui 58 en forme de crochets.

On peut ainsi constater que l'assemblage du piège selon l'invention est extrêmement simple. Il suffit d'engager les pivots 44 de l'étrier jusqu'au fond des encoches 23b où ils sont maintenus par l'élasticité du matériau de la section arrière 2b du corps, d'accrocher les extrémités du ressort 3 respectivement au point d'accrochage 25 de la section arrière et au point d'attache 45 de l'étrier. On procède de même pour engager les pivots 52 du déclencheur 5 dans les encoches 24b de la section arrière. Il suffit alors de relever l'étrier en position verticale et d'emboiter la section avant 2a du corps dans la section arrière pour refermer les paliers des pivots et compléter l'assemblage du piège. Avantageusement, la partie comprise entre les encoches 23b et 24b, sur chaque paroi latérale de la section arrière peut être munie de moyens tels que des crochets ou des cannelures coopérant avec des moyens complémentaires formés dans la partie en regard de la section avant pour verrouiller la fermeture du corps 2. Il est également possible, si on ne souhaite pas que le piège soit démontable, de coller ou de souder les deux sections ensemble,

On se réfère à la figure 2 qui représente une vue du piège 1 monté, dans sa position de prise, vue depuis l'ouverture d'entrée 21 du piège. Dans cette vue, la plaque 55 et le porte-appât 51 sont représentés en pointillés de manière à permettre de voir le mécanisme du piège derrière la plaque 55. Dans cette position, l'étrier 4 a pivoté sur ses pivots 44 sous l'effort de traction exercé par le ressort 3, jusqu'à ce que la barre de frappe 41 vienne reposer sur une enclume 26 ménagée dans la section avant 2a du corps 2. L'enclume 26 comporte de chaque côté une encoche 28 capable d'accueillir l'extrémité des pattes d'appui 28 du déclencheur lorsque la barre de frappe 41 repose sur l'enclume.

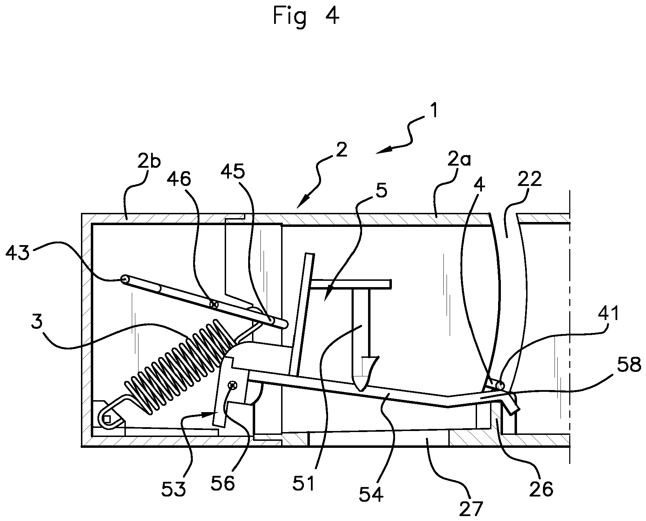

Le fonctionnement du piège selon l'invention est le suivant : on installe un appât solide approprié en fonction de l'animal visé sur le porte-appât 51. Grâce à une trappe 27 (figure 3 ou 4) de dimensions suffisantes pour y passer les doigts, ménagée dans le corps du piège, plus précisément dans le plancher de la section avant 2a, juste au-dessous du porte-appât, il est possible d'installer l'appât sans risque pour les doigts, même en position armée de l'étrier, le passage des doigts étant en dehors du trajet de la barre de frappe 41 de l'étrier. Bien entendu, il est préférable d'installer l'appât lorsque le piège est désarmé. Dans ce cas, le déclencheur 5 est immobilisé par ses pattes d'appui 58 sous la barre de frappe de l'étrier (voir figure 4), le porte-appât 51 est ainsi orienté vers la trappe 27 et maintenu dans cette position. De ce fait, les efforts exercés sur le porte-appât pour y fixer l'appât n'entrainent pas de mouvement du porte-appât ce qui facilite la mise en place de l'appât.

Pour l'armement du piège selon l'invention, il suffit de saisir l'étrier 4 par ses bras latéraux 42 et de le faire pivoter vers le haut en tendant le ressort 3 jusqu'à ce que le talon 43 de l'étrier vienne au contact d'une butée d'armement 57 formée (dans l'exemple représenté) de la face arrière 53 du déclencheur 5.

Le point d'accrochage 25 du ressort 3 sur le corps du piège étant placé en arrière du plan de l'étrier en position verticale armée et le point d'attache 45 de l'autre extrémité du ressort 3 étant placé plus haut que l'axe de l'étrier, le couple exercé par le ressort 3 tend à faire basculer l'étrier 4 en arrière, mais celui-ci est bloqué dans sa position armée par l'appui du talon 43 sur la face arrière 53 du déclencheur 5. Dès lors, l'étrier 4 est dans une position armée métastable. Il n'est donc pas nécessaire de bloquer l'étrier 4 dans sa position armée au moyen de dispositifs autres, souvent compliqués et délicats à mettre en oeuvre et présentant le risque de relâcher l'étrier, le cas échéant sur les doigts de l'opérateur, en cas de fausse manoeuvre. En outre, comme représenté à la figure 3, lorsque la position armée de l'étrier est verticale et la face arrière 53 du déclencheur est plane et sensiblement orthogonale au plan moyen de celui-ci, l'appui exercé par le talon 43 tend à ramener le déclencheur 5 dans sa position d'équilibre.

Lorsqu'un animal entre dans le piège et s'approche de l'appât, il fait basculer le déclencheur 5, soit en montant sur la plateforme 54, soit en tirant / poussant sur l'appât. Quel que soit le mouvement de bascule du déclencheur, vers le haut ou vers le bas, le pivotement de la face arrière 53 de celui-ci repousse le talon 43 de l'étrier vers l'arrière. Dans l'exemple représenté à la figure 3, où la face arrière 53 est plane et verticale lorsque le déclencheur est dans sa position d'équilibre, tout écart de celui-ci par rapport à sa position d'équilibre tend à faire basculer l'étrier vers et au-delà du point mort haut. La force tangentielle et donc le couple agissant sur l'étrier, qui tendait à maintenir celui-ci dans sa position d'armement, change de sens et rabat la barre de frappe 41 de l'étrier en direction du corps. Celle-ci passe par la fente 22 pour venir s'abattre sur l'animal pris au piège entre la barre de frappe et l'enclume 26.

La section avant 2a du corps 2 du piège étant préférentiellement en matière synthétique transparente ou translucide, il est possible de voir immédiatement si un animal est pris dans le piège. De cette manière, si le piège a été déclenché intempestivement, par exemple par un choc externe ou un animal domestique, il est possible de le réarmer sans avoir besoin de prendre les précautions hygiéniques d'usage lorsqu'un animal a été pris au piège. En outre, la transition lumineuse entre le milieu extérieur au piège et l'entrée de celui-ci est atténuée, limitant la méfiance d'un animal approchant de l'ouverture d'entrée.

Bien entendu, cette description est donnée à titre d'exemple illustratif uniquement et l'homme du métier pourra y apporter de nombreuses modifications sans sortir de la portée de l'invention, comme par exemple installer deux ressorts symétriques de part et d'autre du talon de l'étrier en ménageant deux points d'attache symétriques sur l'étrier. Par ailleurs, même si le piège décrit ci-avant présente une forme parallélépipédique, toute autre forme susceptible de former un tunnel peut être employée, par exemple un cylindre de révolution, pour autant qu'il soit équipé de moyens, par exemple de pieds, permettant de le maintenir à l'horizontale et de lui éviter de basculer latéralement.

## Revendications

1. Piège (1) pour animaux nuisibles, notamment rats et souris, comportant :
• un corps (2) formant tunnel, ouvert au moins à l'une de ses extrémités, dite ouverture d'entrée (21),
• un étrier (4), comportant une barre de frappe (41), guidé en rotation autour d'un axe, dit axe d'étrier (46), entre une première position, dite position armée, dans laquelle la barre de frappe est au-dessus du corps et une seconde position dite position de prise,
• un dispositif de rappel élastique (3) de l'étrier dans la position de prise,
• un déclencheur (5) adapté pour déclencher le rappel de l'étrier de la position armée à la position de prise par le dispositif de rappel élastique, **caractérisé en ce que**
• le déclencheur (5) comporte à l'intérieur du corps (2) une plateforme (54) pivotante autour d'un axe (56) parallèle à l'axe d'étrier, ladite plateforme comprenant un porte-appât (51) agencé pour permettre la fixation d'un appât solide par le dessous de la plateforme,
• le corps (2) du piège comporte une trappe (27) ménagée dans la face inférieure du corps en regard du porte-appât (51), ladite trappe présentant une ouverture d'une taille adaptée pour permettre un accès manuel au porte-appât (51) et la fixation de l'appât sur le porte-appât.

2. Piège selon la revendication 1, **caractérisé en ce que** le dispositif de rappel élastique (3) comporte un point d'attache (45) sur l'étrier (4) distinct de l'axe (46) d'étrier, et est agencé de manière à produire une force de rappel comportant une composante radiale dirigée en direction de l'axe d'étrier et une composante tangentielle dont le sens s'inverse au passage d'un point mort haut, placé entre la position armée et la position de prise et **en ce que** le piège (1) comporte une butée, dite butée d'armement (57), limitant un déplacement de l'étrier au-delà de la position d'armement à l'opposé de la position de prise, la composante tangentielle de la force de rappel appliquant l'étrier contre la butée d'armement en position armée.

3. Piège selon la revendication 2, **caractérisé en ce que** le point d'attache (45) du dispositif de rappel élastique (3) sur l'étrier est placé entre l'axe d'étrier (46) et la barre de frappe (41) dans un plan défini par ceux-ci.

4. Piège selon la revendication 2, **caractérisé en ce que** le point d'attache (45) du dispositif de rappel élastique (3) sur l'étrier est déporté en avant d'un plan défini par l'axe d'étrier (46) et la barre de frappe (41) et placé de façon à permettre un alignement du point d'attache (45), de l'axe d'étrier (46) et d'un point d'accrochage (25) du dispositif de rappel élastique (3) sur le corps (2) au voisinage de la position armée de l'étrier (4).

5. Piège selon l'une quelconque des revendications 1 à 4, **caractérisé en ce que** l'étrier comporte un talon (43) placé à l'opposé de la barre de frappe (41) par rapport à l'axe d'étrier (46), adapté pour venir en butée contre la butée d'armement (57)

6. Piège selon la revendication 5, **caractérisé en ce que** le déclencheur (5) comporte une extrémité, dite face arrière (53), opposée au porte-appât (51) par rapport à l'axe (56) du déclencheur, dont la section droite par un plan orthogonal à l'axe d'étrier (46) présente un rayon de courbure supérieur à une distance minimale entre l'axe du déclencheur et ladite face arrière, de manière à former la butée d'armement (57) lorsque le talon (43)vient en butée contre une zone de ladite face arrière située à cette distance minimale et à éloigner le talon de l'axe du déclencheur en dehors de cette zone.

7. Piège selon la revendication 6, **caractérisé en ce que** la face arrière (53) du déclencheur présente une surface plane orthogonale à et s'étendant de part et d'autre de la plateforme (54) du déclencheur.

8. Piège selon l'une quelconque des revendications 1 à 7, **caractérisé en ce que** la plateforme (54) comporte une plaque (55) transversale sensiblement orthogonale à la plateforme et supportant le porte-appât (51).

9. Piège selon l'une quelconque des revendications 1 à 8, **caractérisé en ce que** la plateforme (54) comporte à son extrémité opposée à la face arrière (53) deux pattes d'appui (58) latérales adaptées pour immobiliser le déclencheur (5) lorsque l'étrier (4) est en position de prise.

10. Piège selon l'une quelconque des revendications 1 à 9, **caractérisé en ce que** le corps (2) du piège comporte deux sections, une section avant (2a) comportant l'ouverture d'entrée (21) et une section arrière (2b) adaptée pour s'emboiter sur la section avant à l'opposé de l'ouverture d'entrée, au moins l'une des deux sections comportant au niveau de l'emboiture des encoches latérales (23, 24) adaptées pour coopérer avec des pivots (44) de l'étrier et (52) du déclencheur.

11. Piège selon l'une quelconque des revendications 1 à 10, **caractérisé en ce que** le corps du piège comporte une fente (22) en arc de cercle sur ses parois latérales et ouverte sur le dessus pour permettre le passage de la barre de frappe (41) de l'étrier entre la position d'armement et la position de prise.

12. Piège selon la revendication 11, **caractérisé en ce que** le corps du piège comporte en regard de la fente (22) en arc de cercle une enclume (26) adaptée pour recevoir la barre de frappe (41) lorsque l'étrier (4) est en position de prise.

13. Piège selon la revendication 12, **caractérisé en ce que** l'enclume comporte deux encoches (28) latérales adaptées pour recevoir les pattes d'appui (58) lorsque l'étrier (4) est en position de prise.

14. Piège selon l'une quelconque des revendications 1 à 13, **caractérisé en ce que** le corps du piège est au moins partiellement transparent ou translucide.

15. Piège selon l'une quelconque des revendications 1 à 14, **caractérisé en ce que** l'étrier (4) est formé d'une tige contre-coudée formant en une seule pièce la barre de frappe (41), des bras latéraux (42), des pivots (44) matérialisant l'axe (46) d'étrier, au moins un point d'attache (45) du dispositif élastique (3) et un talon (43) de l'étrier.

## Patentansprüche

1. Falle (1) für tierische Schädlinge, insbesondere für Ratten und Mäuse, umfassend:
- einen Tunnel bildenden Korpus (2), der zumindest an einem seiner Enden, Eingangsöffnung (21) genannt, offen ist,
- einen Bügel (4), eine Schlagstange (41) umfassend, die um eine Achse, die Bügelachse (46) genannt wird, zwischen einer ersten Position, die gespannte Position genannt wird, in der die Schlagstange über dem Korpus ist, und einer zweiten Position drehend geführt ist, die Fangposition genannt wird,
- eine elastische Rückstellvorrichtung (3) des Bügels in die Fangposition,
- einen Auslöser (5), der ausgeführt ist, um die Rückstellung des Bügels von der gespannten Position in die Fangposition durch die elastische Rückstellvorrichtung auszulösen,
**dadurch gekennzeichnet, dass**
- der Auslöser (5) im Inneren des Korpus (2) eine Plattform (54) umfasst, die sich um eine parallele Achse (56) zur Bügelachse dreht, wobei die Plattform einen Köderträger (51) umfasst, der angeordnet ist, um die Befestigung eines festen Köders von der Unterseite der Plattform zu ermöglichen,
- der Korpus (2) der Falle eine Klappe (27) umfasst, die an der Unterseite des Korpus gegenüber dem Köderträger (51) angeordnet ist, wobei die Klappe eine Öffnung mit einer angepassten Größe aufweist, um einen manuellen Zugriff auf den Köderträger (51) und die Befestigung des Köders am Köderträger zu ermöglichen.

2. Falle nach Anspruch 1, **dadurch gekennzeichnet, dass** die elastische Rückstellvorrichtung (3) einen Anbindungspunkt (45) auf dem Bügel (4) umfasst, der sich von der Bügelachse (46) unterscheidet, und angeordnet ist, um eine Rückstellkraft zu erzeugen, die eine radiale Komponente, die in Richtung der Bügelachse gerichtet ist, und eine tangentiale Komponente umfasst, deren Richtung sich beim Durchlaufen eines oberen Totpunktes umkehrt, der zwischen der gespannten Position und der Fangposition platziert ist, und dadurch, dass die Falle (1) einen Anschlag, der Spannanschlag (57) genannt wird, umfasst, der eine Bewegung des Bügels über die Spannposition hinaus entgegengesetzt zur Fangposition eingrenzt, wobei die tangentiale Komponente der Rückstellkraft den Bügel in der gespannten Position an den Spannanschlag anlegt.

3. Falle nach Anspruch 2, **dadurch gekennzeichnet, dass** der Anbindungspunkt (45) der elastischen Rückstellvorrichtung (3) am Bügel zwischen der Bügelachse (46) und der Schlagstange (41) auf einer durch diese definierten Ebene platziert ist.

4. Falle nach Anspruch 2, **dadurch gekennzeichnet, dass** der Anbindungspunkt (45) der elastischen Rückstellvorrichtung (3) am Bügel vor eine Ebene versetzt ist, die durch die Bügelachse (46) und die Schlagstange (41) definiert wird, und derart platziert ist, um eine Fluchtung des Anbindungspunktes (45), der Bügelachse (46) und eines Einhängpunktes (25) der elastischen Rückstellvorrichtung (3) am Korpus (2) in der Nähe der gespannten Position des Bügels (4) zu ermöglichen.

5. Falle nach einem der Ansprüche 1 bis 4, **dadurch gekennzeichnet, dass** der Bügel einen Absatz (43) umfasst, der im Verhältnis zur Bügelachse (46) entgegengesetzt zur Schlagstange (41) platziert ist, ausgeführt, um sich auf Anschlag am Spannanschlag (57) anzulegen.

6. Falle nach Anspruch 5, **dadurch gekennzeichnet, dass** der Auslöser (5) ein Ende, das Rückseite (53) genannt wird, im Verhältnis zur Achse (56) des Auslösers entgegengesetzt zum Köderträger (51) umfasst, dessen gerader Abschnitt durch eine Ebene senkrecht zur Bügelachse (46) einen Kurvenradius größer als einen Mindestabstand zwischen der Achse des Auslösers und der Rückseite aufweist, um den Spannanschlag (57) zu bilden, wenn der Absatz (43) auf Anschlag an eine Zone der Rückseite angelegt wird, die sich auf diesem Mindestabstand befindet, und um den Absatz der Achse des Auslösers aus dieser Zone zu entfernen.

7. Falle nach Anspruch 6, **dadurch gekennzeichnet, dass** die Rückseite (53) des Auslösers eine zur Plattform (54) des Auslösers senkrechte, und sich beiderseits derselben erstreckende ebene Oberfläche aufweist.

8. Falle nach einem der Ansprüche 1 bis 7, **dadurch gekennzeichnet, dass** die Plattform (54) eine querlaufende Platte (55), im Wesentlichen senkrecht zur Plattform und den Köderhalter (51) tragend, umfasst.

9. Falle nach einem der Ansprüche 1 bis 8, **dadurch gekennzeichnet, dass** die Plattform (54) an ihrem entgegengesetzten Ende zur Rückseite (53) zwei seitliche Stützlaschen (58) umfasst, die ausgeführt sind, um den Auslöser (5) zu blockieren, wenn der Bügel (4) in der Fangposition ist.

10. Falle nach einem der Ansprüche 1 bis 9, **dadurch gekennzeichnet, dass** der Korpus (2) der Falle zwei Abschnitte umfasst, einen vorderen Abschnitt (2a), der die Eingangsöffnung (21) umfasst, und einen hinteren Abschnitt (2b), der ausgeführt ist, um sich an dem vorderen Abschnitt, entgegengesetzt zur Eingangsöffnung einzufügen, wobei zumindest die eine der beiden Abschnitte im Bereich der Fuge laterale Auskerbungen (23, 24) umfasst, die ausgeführt sind, um mit den Drehwellen (44) des Bügels und (52) des Auslösers zusammenzuwirken.

11. Falle nach einem der Ansprüche 1 bis 10, **dadurch gekennzeichnet, dass** der Korpus der Falle einen Schlitz (22) in Kreisbogenform an seinen Seitenwänden und offen an der Oberseite umfasst, um den Durchlass der Schlagstange (41) des Bügels zwischen der Spannposition und der Fangposition zu ermöglichen.

12. Falle nach Anspruch 11, **dadurch gekennzeichnet, dass** der Korpus der Falle gegenüber dem Schlitz (22) in Kreisbogenform einen Amboss (26) umfasst, der ausgeführt ist, um die Schlagstange (41) aufzunehmen, wenn der Bügel (4) in der Fangposition ist.

13. Falle nach Anspruch 12, **dadurch gekennzeichnet, dass** der Amboss zwei laterale Auskerbungen (28) umfasst, die ausgeführt sind, um die Stützlaschen (58) aufzunehmen, wenn der Bügel (4) in der Fangposition ist.

14. Falle nach einem der Ansprüche 1 bis 13, **dadurch gekennzeichnet, dass** der Korpus der Falle zumindest teilweise transparent oder durchscheinend ist.

15. Falle nach einem der Ansprüche 1 bis 14, **dadurch gekennzeichnet, dass** der Bügel (4) aus einem gekröpften Stift gebildet wird, der in einem einzigen Stück die Schlagstange (41), Seitenarme (42), Drehwellen (44), die die Achse (46) des Bügels verwirklichen, zumindest einen Anbindungspunkt (45) der elastischen Vorrichtung (3) und einen Absatz (43) des Bügels bildet.

## Claims

1. Trap (1) for pests, in particular rats and mice, comprising:
- a body (2) forming a tunnel, open at at least one of the ends thereof, referred to as the entry opening (21),
- a clamp (4), comprising a strike bar (41), guided in rotation about an axis, referred to as the clamp axis (46), between a first position, referred to as the armed position, in which the strike bar is above the body, and a second position referred to as the gripping position,
- a device (3) for elastic return of the clamp to the gripping position,
- a trigger (5) suitable for triggering the return of the clamp from the armed position to the gripping position by the elastic return device,
**characterised in that**
- the trigger (5) comprises, inside the body (2), a platform (54) pivoting about an axis (56) parallel to the clamp axis, said platform comprising a bait holder (51) arranged to allow the fixing of solid bait from underneath the platform,
- the body (2) of the trap comprises a hatch (27) provided in the bottom face of the body opposite the bait holder (51), said hatch having an opening of a size suitable for allowing manual access to the bait holder (51) and fixing of the bait on the bait holder.

2. Trap according to claim 1, **characterised in that** the elastic return device (3) comprises an attachment point (45) on the clamp (4) separate from the clamp axis (46), and is arranged so as to produce a return force comprising a radial component directed in the direction of the clamp axis and a tangential component, the direction of which reverses on passing a top dead centre, placed between the armed position and the gripping position, and **in that** the trap (1) comprises a stop, referred to as the arming stop (57), limiting a movement of the clamp beyond the arming position opposite to the gripping position, the tangential component of the return force applying the clamp against the arming stop in the armed position.

3. Trap according to claim 2, **characterised in that** the point (45) of attachment of the elastic return device (3) on the clamp is placed between the clamp axis (46) and the strike bar (41) in a plane defined by these.

4. Trap according to claim 2, **characterised in that** the point (45) of attachment of the elastic return device (3) on the clamp is offset in front of a plane defined by the clamp axis (46) and the strike bar (41) and placed so as to allow an alignment of the attachment point (45), the clamp axis (46) and a point (25) of attachment of the elastic return device (3) on the body (2) in the vicinity of the armed position of the clamp (4) .

5. Trap according to any of claims 1 to 4, **characterised in that** the clamp comprises a heel (43) placed opposite to the strike bar (41) with respect to the clamp axis (46), suitable for coming into abutment against the arming stop (57).

6. Trap according to claim 5, **characterised in that** the trigger (5) comprises an end, referred to as the rear face (53), opposite to the bait holder (51) with respect to the axis (56) of the trigger, the cross section of which through a plane orthogonal to the clamp axis (46) has a radius of curvature greater than a minimum distance between the axis of the trigger and said rear face, so as to form the arming stop (57) when the heel (43) comes into abutment against a zone of said rear face situated at this minimum distance and to move the heel away from the axis of the trigger outside this zone.

7. Trap according to claim 6, **characterised in that** the rear face (53) of the trigger has a planar surface orthogonal to and extending on either side of the platform (54) of the trigger.

8. Trap according to any of claims 1 to 7, **characterised in that** the platform (54) comprises a transverse plate (55) substantially orthogonal to the platform and supporting the bait holder (51).

9. Trap according to any of claims 1 to 8, **characterised in that** the platform (54) comprises, at its end opposite to the rear face (53), two lateral support lugs (58) suitable for immobilising the trigger (5) when the clamp (4) is in the gripping position.

10. Trap according to any of claims 1 to 9, **characterised in that** the body (2) of the trap comprises two sections, a front section (2a) comprising the entry opening (21) and a rear section (2b) suitable for fitting on the front section opposite to the entry opening, at least one of the two sections comprising, at the joint, lateral recesses (23, 24) suitable for cooperating with pivots (44) of the clamp and (52) of the trigger.

11. Trap according to any of claims 1 to 10, **characterised in that** the body of the trap comprises a slot (22) in an arc of a circle on its lateral walls and open on the top in order to allow passage of the strike bar (41) of the clamp between the arming position and the gripping position.

12. Trap according to claim 11, **characterised in that** the body of the trap comprises, opposite to the slot (22) in an arc of a circle, an anvil (26) suitable for receiving the strike bar (41) when the clamp (4) is in the gripping position.

13. Trap according to claim 12, **characterised in that** the anvil comprises two lateral recesses (28) suitable for receiving the support lugs (58) when the clamp (4) is in the gripping position.

14. Trap according to any of claims 1 to 13, **characterised in that** the body of the trap is at least partially transparent or translucent.

15. Trap according to any of claims 1 to 14, **characterised in that** the clamp (4) is formed by an angled rod forming in a single piece the strike bar (41) lateral arms (42), pivots (44) forming the clamp axis (46), at least one point of attachment (45) of the elastic device (3) and a heel (43) of the clamp.
